# EUROPÄISCHE PATENTSCHRIFT

(11) **EP 3 544 843 B1**
(45) Veröffentlichungstag und Bekanntmachung des Hinweises auf die Patenterteilung: **25.02.2026**
(21) Anmeldenummer: 17804072.1
(22) Anmeldetag: 01.11.2017
(51) Int. Cl.: B60L 5/28, B60L 5/42

(54) **POSITIONIEREINHEIT UND VERFAHREN ZUR KONTAKTIERUNG**
POSITIONING UNIT AND CONTACTING-MAKING METHOD
UNITÉ DE POSITIONNEMENT ET PROCÉDÉ DE MISE EN CONTACT ÉLECTRIQUE

(30) Priorität: 22.11.2016 DE 102016223051
(43) Veröffentlichungstag der Anmeldung: 02.10.2019
(73) Patentinhaber: Schunk Transit Systems GmbH, 5151 Nussdorf am Haunsberg (AT)
(72) Erfinder: PACHLER, Alexander, 5020 Salzburg (AT)
(74) Vertreter: advotec.
(86) Internationale Anmeldenummer: PCT/EP2017/077972
(87) Internationale Veröffentlichungsnummer: WO 2018/095706

(56) Entgegenhaltungen:
- WO-A1-2009/039406
- WO-A1-2015/126320
- CN-A- 101 531 141
- DE-A1- 102010 027 670
- GB-A- 2 518 129
- US-A1- 2013 076 902
- US-A1- 2014 360 832

## Beschreibung

Die Erfindung betrifft eine Positioniereinheit gemäß Anspruch 1 und ein Verfahren gemäß Anspruch 8.

Derartige Positioniereinheiten und Verfahren sind aus dem Stand der Technik bekannt und werden regelmäßig bei elektrisch angetriebenen Fahrzeugen eingesetzt, die zwischen Haltestellen verkehren. Dies können Elektrobusse, aber auch prinzipiell andere Fahrzeuge, wie beispielsweise ein Zug oder eine Straßenbahn, sein, die nicht permanent elektrisch mit einem Fahrdraht oder ähnlichem verbunden sind. Bei diesen Fahrzeugen erfolgt eine Aufladung eines elektrischen Energiespeichers bei Fahrtunterbrechung an einer Haltstelle durch eine Ladestation. Das Fahrzeug wird an der Haltestelle mit der Ladestation elektrisch verbunden, wobei der Energiespeicher zumindest soweit aufgeladen wird, dass das Fahrzeug die nächste anzufahrende Haltestelle mit einer Ladestation erreichen kann. Zur Herstellung einer elektrischen Verbindung zwischen Fahrzeug und Ladestation wird eine Positioniereinheit eingesetzt, die auf einem Fahrzeugdach oder alternativ oberhalb des Fahrzeugs, beispielsweise an einem Mast montiert sein kann. Die Positioniereinheit kann dann einen Ladekontakt mit einer Ladekontaktfläche verbinden, so dass das Fahrzeug beziehungsweise der Energiespeicher an der Haltestelle aufgeladen werden kann.

Wesentlich bei einer Zusammenführung von Ladekontakt und Ladekontaktfläche ist, dass der Ladekontakt mit einer definierten Kontaktkraft auf die Ladekontaktfläche gedrückt wird, um eine sichere elektrische Verbindung ausbilden zu können. Eine Positioniereinheit oberhalb eines Fahrzeugs ist aus der DE 202014007218 U1 bekannt, wobei die Positioniereinheit eine Gelenkarmvorrichtung und eine Antriebvorrichtung umfasst. Die Antriebvorrichtung weist einen Verstellantrieb und eine Federeinrichtung auf, die dazu dienen, die Gelenkarmvorrichtung relativ zu der Ladekontaktfläche des Fahrzeugs zu bewegen. Insbesondere eine Aufwärtsbewegung der Gelenkarmvorrichtung erfordert eine Verstellkraft des Verstellantriebs.

Stets nachteilig bei den bekannten Positioniereinheiten ist, dass diese für eine definierte Kontakthöhe, das heißt einen Abstand der Positioniereinheit in einer Einfahrposition zur Verwahrung des Ladekontakts relativ zu einer Kontaktposition zur Stromübertragung auf das Fahrzeug, ausgebildet beziehungsweise angeordnet sein müssen. Das heißt, dass ein Relativabstand von Kontaktposition und Einfahrposition nicht variabel nutzbar ist und regelmäßig eingestellt oder durch konstruktive Änderung angepasst werden muss, da sonst nicht die notwendige beziehungsweise gewünschte Kontaktkraft auf die Ladekontaktfläche aufgebracht werden kann. Insbesondere wenn Fahrzeugtypen und damit die Höhen der Fahrzeuge wechseln, kann ein Relativabstand von Einfahrposition und Kontaktposition infolge von abweichenden Höhen der Kontaktflächen der Fahrzeuge über einer Fahrbahn stark schwanken. Gleiches gilt für eine unterschiedliche Beladung eines Fahrzeugs oder ein Absenken eines Fahrzeugs beziehungsweise eines Busses im Bereich einer Haltstelle, um einen Zugang für beispielsweise Personen mit einer körperlichen Beeinträchtigung zu erleichtern. Bei dem Absenken des Fahrzeugs bewegt sich dann der Ladekontakt in vertikaler Richtung relativ zur Ladekontaktfläche, wenn die Kontaktkraft nicht weiter aufrechterhalten werden kann.

Weiter ist nachteilig, das bei einem Ausfahren des elektrischen Ladekontakts das Ausfahren des Ladekontakts relativ langsam erfolgt. Wenn im Bereich einer Haltestelle ein Fahrzeug während eines Zwischenstopps aufgeladen werden soll, sollte jedoch eine Haltezeit des Fahrzeugs möglich effektiv zum Aufladen des Fahrzeugs genutzt werden. Ein möglichst schnelles Ausfahren des elektrischen Ladekontakts, und damit eine schnelle Kontaktierung der Ladekontaktfläche mit dem Ladekontakts ist jedoch nicht ohne Weiteres möglich, da der elektrische Ladekontakt oder die Ladekontaktfläche dann gegebenenfalls bei dem Vorgang der Kontaktierung beschädigt werden oder vergleichsweise schnell verschleißen. Darüber hinaus kann es bei einem Zusammentreffen von Ladekontakt und Ladekontaktfläche zu einer unerwünschten Geräuschentwicklung kommen, die Anwohner der Haltestelle oder Fahrgäste stören bzw. verunsichern könnten.

Die CN 101 531 141 A zeigt Positioniereinheit zur Ausbildung einer elektrisch leitenden Verbindung zwischen einer stationären Ladestation und einem elektrisch angetriebenen Fahrzeug. Die Positioniereinheit umfasst dabei zur Positionierung eines Ladekontaktes eine Gelenkarmvorrichtung sowie eine Antriebsvorrichtung zum Antrieb der Gelenkarmvorrichtung. Darüber hinaus weist die Antriebsvorrichtung eine Sensoreinrichtung sowie eine Regeleinrichtung auf, mittels derer eine Position der Ladekontakte detektierbar und einstellbar ist.

Die DE 10 2010 027670 A1, die US 2013/076902 A1, die WO 2009/039406 A1, die WO 2015/126320 A1 und die US 2014/0360832 A1 sowie die GB 2 518 129 A betreffen weitere Positioniereinheiten der eingangs genannten Art.

Es ist daher Aufgabe der Erfindung eine Positioniereinheit und ein Verfahren zur Ausbildung einer elektrisch leitenden Verbindung zwischen einem Fahrzeug und einer Ladestation vorzuschlagen, die beziehungsweise das eine verlängerte Ladezeit eine sichere Kontaktierung des Fahrzeugs ermöglicht.

Diese Aufgabe wird durch eine Positioniereinheit mit den Merkmalen des Anspruchs 1 und ein Verfahren mit den Merkmalen des Anspruchs 8 gelöst.

Die erfindungsgemäße Positioniereinheit zur Ausbildung einer elektrisch leitenden Verbindung zwischen einer stationären Ladestation und einem Fahrzeug, insbesondere Elektrobus oder dergleichen, ist so ausgebildet, dass mittels der Positioniereinheit ein elektrischer Ladekontakt, den die Positioniereinheit aufweist, relativ zu einer Ladekontaktfläche bewegbar und mit dieser kontaktierbar ist, wobei die Positioniereinheit eine Gelenkarmvorrichtung und eine Antriebvorrichtung zum Antrieb der Gelenkarmvorrichtung aufweist, wobei der Ladekontakt mittels der Gelenkarmvorrichtung zwischen einer Kontaktposition zur Stromübertragung und einer Einfahrposition zur Stromunterbrechung positionierbar ist, wobei die Antriebvorrichtung einen Verstellantrieb zur Ausbildung einer auf die Gelenkarmvorrichtung wirkenden Verstellkraft aufweist, wobei die Antriebvorrichtung eine Regeleinrichtung aufweist, mittels der der Verstellantrieb ansteuerbar ist, wobei die Antriebvorrichtung eine Sensoreinrichtung aufweist, mittels der die Ladekontaktfläche detektierbar ist, wobei die Sensoreinrichtung mit der Regeleinrichtung gekoppelt ist, wobei eine Geschwindigkeit des Ladekontakts während einer Bewegung des Ladekontakts von der Einfahrposition in die Kontaktposition in Abhängigkeit eines Relativabstandes von Ladekontakt und Ladekontaktfläche von der Regeleinrichtung regelbar ist, wobei die Antriebvorrichtung eine mit dem Verstellantrieb mechanisch zusammenwirkende Federeinrichtung aufweist, wobei die Positioniereinheit eine Haltevorrichtung zur Befestigung der Positioniereinheit oberhalb eines Fahrzeugs an einem Mast oder einer Unterquerung umfasst, wobei die Federeinrichtung zumindest eine Rückstellfeder zur Ausbildung einer Rückstellkraft auf die Gelenkarmvorrichtung umfasst, wobei die Rückstellkraft größer ist als eine auf die Rückstellfeder entgegengesetzt wirkende Gewichtskraft der Gelenkarmvorrichtung.

Die Positioniereinheit kann demnach Bestandteil einer stationären Ladestation für ein elektrisch angetriebenes Fahrzeug oder Bestandteil eines elektrisch angetriebenen Fahrzeugs sein, wobei die Positioniereinheit dazu dient, den Ladekontakt der Ladestation oder des Fahrzeugs auf eine Ladekontaktfläche des Fahrzeugs beziehungsweise der Ladestation zu bewegen und mit dieser elektrisch zu kontaktieren. So ist es dann möglich, das Fahrzeug während einer Fahrtunterbrechung an der Ladestation mit elektrischer Energie zu versorgen und diese im Fahrzeug zu speichern. Die Bewegung des Ladekontakts auf die Ladekontaktfläche hin und zurück wird durch die Gelenkarmvorrichtung und die Antriebvorrichtung der Positioniereinheit ausgeführt. Der Ladekontakt ist dazu an einem Ende der Gelenkarmvorrichtung angeordnet. Die Antriebvorrichtung dient dazu, den Ladekontakt und damit die Gelenkarmvorrichtung von einer Einfahrposition zur Verwahrung des Ladekontakts bis zu einer Kontaktposition zur Stromübertragung beziehungsweise Kontaktierung der Ladekontaktfläche mit dem Ladekontakt zu bewegen. Die Verstellkraft wird durch den Verstellantrieb der Antriebvorrichtung auf die Gelenkarmvorrichtung bewirkt. Während einer Bewegung des Ladekontakts ist die Verstellkraft von einer Mechanik der Gelenkarmvorrichtung beziehungsweise einer Übersetzung des Verstellantriebs abhängig und verändert sich kaum.

Die Antriebvorrichtung weist darüber hinaus die Regeleinrichtung auf, die beispielsweise auch eine Regelelektronik für den Verstellantrieb sein kann. Die Regelelektronik kann dabei direkt in dem Verstellantrieb, in dem Fahrzeug oder der Ladestation integriert sein. Weiter ist es möglich, mittels der Sensoreinrichtung der Antriebvorrichtung die Ladekontaktfläche zu detektieren bzw. diese zu erfassen und deren Position zu bestimmen. Da die Sensoreinrichtung mit der Regeleinrichtung gekoppelt ist, wird es möglich einen Relativabstand von Ladekontakt und Ladekontaktfläche zu bestimmen bzw. mittels der Regeleinrichtung zu berechnen. Dazu ist es prinzipiell ohne Bedeutung, ob die Sensoreinrichtung direkt mittels elektrischer Leitungen mit der Regeleinrichtung verbunden ist, oder ob eine Kopplung drahtlos erfolgt. Durch die Bestimmung des Relativabstandes wird es möglich die Geschwindigkeit des Ladekontakts während einer Bewegung des Ladekontakts von der Einfahrposition in die Kontaktposition in Abhängigkeit des Relativabstandes von Ladekontakt und Ladekontaktfläche mittels der Regeleinrichtung zu regeln. So kann zunächst eine Geschwindigkeit nahezu beliebig hoch sein, solange der Ladekontakt in der letzten Phase der Bewegung des Ladekontakts von der Einfahrposition in die Kontaktposition ausreichend langsam ist, so dass keine Beschädigung des Ladekontakts oder der Ladekontaktfläche erfolgt und/oder unerwünscht hohe Geräuschemissionen durch den Kontaktierungsvorgang entstehen. Durch diese Regelung der Ausfahrbewegung bzw. Geschwindigkeit des Ladekontakts wird es möglich, den Ladekontakt vergleichsweise schneller mit einer Ladekontaktfläche zu kontaktieren, wodurch eine Ladezeit eines Fahrzeugs bei einem Zwischenstopp an einer Haltestelle vorteilhaft verlängert werden kann. Gleichzeitig kann eine Geräuschentwicklung beim Kontaktieren von Ladekontakt und Ladekontaktfläche vorteilhaft beeinflusst werden. Optional kann vorgesehen sein, eine Bewegung des Ladekontakts von der Kontaktposition in die Einfahrposition mittels der Regeleinrichtung in übereinstimmender Weise zu regeln.

Von dem Verstellantrieb kann eine Kontaktkraft auf die Ladekontaktfläche ausgebildet werden, wobei der Verstellantrieb die Regeleinrichtung und einen Elektromotor aufweisen kann, der mittels der Regeleinrichtung ansteuerbar sein kann. In der Kontaktposition kann so eine definierte Kontaktkraft auf die Ladekontaktfläche von der Positioniereinheit ausgebildet werden. In der Einfahrposition kann hingegen keine oder nur eine sehr kleine Verstellkraft auf die Gelenkarmvorrichtung wirken, so dass keine Bewegung der Gelenkarmvorrichtung bzw. des Ladekontakts erfolgen kann. Bei der Kontaktierung des Ladekontakts und der Ladekontaktfläche kann die Verstellkraft durch den Verstellantrieb erhöht werden, was zu einer Ausbildung bzw. Erhöhung der Kontaktkraft auf die Ladekontaktfläche führt. Die Regeleinrichtung kann insbesondere ein Drehmoment des Elektromotors über beispielsweise die aufgewendete Energie erfassen und den Elektromotor so regeln, dass die definierte Kontaktkraft von dem Elektromotor über die Gelenkarmvorrichtung und den Ladekontakt auf die Ladekontaktfläche ausgebildet wird. Es ist dann möglich, eine unmittelbare Kraftwirkung auf die Gelenkarmvorrichtung und gegebenenfalls auf den Ladekontakt, optional auch in Abhängigkeit von verschiedenen Einflussfaktoren, aktiv anzupassen. Somit kann unabhängig von einem Relativabstand von Ladekontaktfläche und Positioniereinheit bzw. einer Höhe des Fahrzeugs eine stets gleich hohe Kontaktkraft auf die Ladekontaktfläche ausgebildet werden.

Wenn der Verstellantrieb einen bürstenlosen Elektromotor aufweist, können besonders viele Bewegungszyklen ausgeführt werden. Ein bürstenloser Elektromotor erfordert wesentlich weniger und längere Wartungsinterwalle als ein bürstenbehafteter Elektromotor bei gleichen mechanischen Leistungsdaten. So ist es insgesamt möglich, eine Positioniereinheit auszubilden, deren Wartungsintervalle verlängert sind beziehungsweise deren Lebensdauer verlängert ist. Als bürstenloser Motor beziehungsweise Elektromotor ohne Schleifkontakte zwischen Rotor und Stator kann beispielsweise eine Drehstrom-Asynchronmaschine mit Kurzschlussläufer oder auch eine Synchronmaschine mit elektronischer Drehfelderzeugung beziehungsweise ein bürstenloser Gleichstrommotor eingesetzt werden.

Der Verstellantrieb kann ein Linearantrieb, bevorzugt ein Spindelantrieb, besonders bevorzugt ein selbsthemmungsfreier Spindelantrieb sein. Der Spindelantrieb kann dann eine entsprechende Spindel mit einer Steigung aufweisen, die eine Selbsthemmung des Spindelantriebs verhindern kann. Der Linearantrieb kann eine Bewegung der Gelenkarmvorrichtung von der Einfahrposition in die Kontaktposition und umgekehrt bewirken. Die Spindel kann insbesondere eine Kugelgewindespindel oder eine Trapezgewindespindel sein, die an den Elektromotor gekoppelt sein kann.

Die Sensoreinrichtung kann zumindest einen Sensor aufweisen, wobei der Sensor ein mechanischer Schalter, ein induktiver Sensor, ein kapazitiver Sensor, ein magnetischer Sensor, ein Ultraschallsensor, ein Radarsensor und/oder ein optischer Sensor sein kann. Die Sensoreinrichtung kann auch optional eine Anzahl mehrerer Sensoren gleicher oder unterschiedlicher Art aufweisen. So kann sichergestellt werden, dass bei einem Ausfall eines Sensors oder bei unterschiedlichen Umgebungsbedingungen zumindest ein Sensor die Ladekontaktfläche erkennen bzw. detektieren kann. In einer einfachen Ausführungsform kann der Sensor als ein mechanischer Schalter ausgebildet sein, der vor dem Ladekontakt bereits die Ladekontaktfläche kontaktiert und so ausgelöst wird. Induktive und kapazitive Näherungssensoren sind besonders vorteilhaft, wenn nur ein kurzer Schaltabstand benötigt wird. Größere Schaltabstände sind mit einem magnetischen Sensor realisierbar. Ein Ultraschallsensor weist eine ausreichende Reichweite auf und ist vergleichsweise robust. Ein Radarsensor kann auch einen Abstand zu der Ladekontaktfläche messen, wenn diese mit einer Schmutz- oder Schneeschicht bedeckt ist. Optische Sensoren eignen sich besonders gut zur Entfernungsmessung und sind vergleichsweise unabhängig von Umgebungsbedingungen. Ein optischer Sensor kann mit mittels Infrarotlicht, Laser oder einfachen Leuchtdioden ausgebildet werden.

Der Sensor kann an der Gelenkarmvorrichtung, insbesondere benachbart dem Ladekontakt, angeordnet sein. Wesentlich ist, dass der Sensor so angeordnet ist, dass er einen Relativabstand von Ladekontaktfläche und Ladekontakt detektieren kann. Dabei kann vorgesehen sein den Sensor an einem distalen Ende der Gelenkarmvorrichtung in der Nähe des Ladekontaktes anzuordnen. Eine Anordnung des Sensors an der Ladekontaktfläche ist in einer nicht erfindungsgemäßen Ausführungsform der Positioniereinheit möglich, wenn der Sensor dann den Ladekontakt bzw. den Relativabstand detektieren kann. Der an der Ladekontaktfläche angeordnete Sensor kann dann beispielsweise eine Abstandsinformation drahtlos an die Regeleinrichtung übermitteln. So ist es dann möglich, Ladestationen mit entsprechenden Sensoren auszustatten, auch wenn die Regeleinrichtung an dem Fahrzeug montiert ist oder umgekehrt.

Der Verstellantrieb und/oder die Gelenkarmvorrichtung kann einen Wegsensor und/oder einen Positionssensor aufweisen. Durch eine Verwendung des Wegsensors ist es dann möglich, einen Bereich einzustellen, innerhalb dem die Gelenkarmvorrichtung mit Hilfe des Verstellantriebs bewegbar ist. Als Wegsensor kann beispielsweise ein Inkremental- oder Absolutwertgeber verwendet werden. Es ist dann auch möglich, immer eine genaue Arbeitsposition des Verstellantriebs beziehungsweise des Ladekontakts zu bestimmen. Der Verstellantrieb kann auch positionsabhängig betätigbare Endlagenschalter und/oder kraftabhängig betätigbare Druckschalter aufweisen. Darüber hinaus kann auch eine Höhe einer Kontaktkraft dadurch begrenzt werden, dass der Verstellantrieb nur bis hin zu einer bestimmten Endlage ausfahren kann. Weiter können auch ergänzend Druckschalter zur Begrenzung der Kontaktkraft genutzt werden, die allein oder zusammen mit den Endlagenschaltern zur Begrenzung des Stellantriebs dienen können. Ein Druckschalter kann unmittelbar am Ladekontakt oder aber auch an der Gelenkarmvorrichtung beziehungsweise an dem Verstellantrieb angeordnet sein. Diese Sensoren sind jedoch nicht Teil der Sensoreinrichtung, und daher nicht zur unmittelbaren Bestimmung des Relativabstandes von Ladekontakt und Ladekontaktfläche geeignet.

Erfindungsgemäß weist die Antriebvorrichtung eine mit dem Verstellantrieb mechanisch zusammenwirkende Federeinrichtung auf. Die Federeinrichtung kann zumindest eine Zugfeder oder eine Druckfeder aufweisen, die eine Federkraft auf die Gelenkarmvorrichtung bewirken kann. Vorzugsweise kann eine Zugfeder verwendet werden, da eine Zugfeder besonders einfach an der Gelenkarmvorrichtung angeschlossen werden kann. Auch kann vorgesehen sein, dass die Federeinrichtung eine Mehrzahl von Federn aufweist, und die Federkraft permanent auf die Gelenkarmvorrichtung wirkt. Die Feder kann demnach in jeder Stellung der Gelenkarmvorrichtung vorgespannt sein. Alternativ ist es auch möglich, eine Druckfeder zur Ausbildung der Federkraft zu verwenden. Eine derartige Federeinrichtung ist besonders robust sowie einfach und kostengünstig herstellbar.

Eine Feder der Federeinrichtung kann über einen Hebel eines Getriebes der Federeinrichtung mit der Gelenkarmvorrichtung mechanisch gekoppelt sein, wobei in Abhängigkeit einer Position der Gelenkarmvorrichtung eine wirksame Länge des Hebels veränderbar ausgebildet sein kann. Der Hebel kann folglich unmittelbar an der Gelenkarmvorrichtung befestigt sein, so dass eine Federkraft der Feder direkt auf die Gelenkarmvorrichtung übertragbar ist. Je nach Lage beziehungsweise Richtung der Federkraft der Feder und Anordnungen des Hebels an der Gelenkarmvorrichtung kann die wirksame Länge des Hebels verkürzt werden, wenn ein zwischen der Richtung der Federkraft und der Erstreckung des Hebels ausgebildeter Winkel kleiner oder größer als 90° ist. Eine wirksame Länge des Hebels lässt sich auch dadurch verändern, dass die Feder über ein Rückstellgetriebe, beispielsweise ausgebildet durch eine Kurvenscheibe oder eine Zugstange, mit einem Anschlag an der Gelenkarmvorrichtung befestigt ist. Die Kurvenscheibe bildet dann den Hebel des Rückstellgetriebes aus. Je nach Lage der Kurvenscheibe relativ zur Feder kann die wirksame Länge des Hebels beeinflusst werden. So ist es möglich, unabhängig von einer Position der Gelenkarmvorrichtung stets die gleiche Rückstellkraft auf die Gelenkarmvorrichtung zu bewirken oder in Abhängigkeit einer Position der Gelenkarmvorrichtung die Rückstellkraft nach den jeweiligen Erfordernissen zu erhöhen oder zu vermindern. Die Rückstellkraft kann auch an die Verstellkraft und die Kontaktkraft angepasst werden. Vorteilhaft ist es, wenn die Rückstellkraft so bemessen ist, dass in jeder Position der Gelenkarmvorrichtung bei einem Ausfall des Verstellantriebs, beispielsweise bewirkt durch einen Stromausfall, ein Einfahren des Ladekontakts infolge der Rückstellkraft selbsttätig erfolgt. Die Positioniereinheit kann damit besonders sicher betrieben werden.

Erfindungsgemäß umfasst die Positioniereinheit eine Haltevorrichtung zur Befestigung der Positioniereinheit oberhalb eines Fahrzeugs an einem Mast oder einer Unterführung, wobei die Federeinrichtung zumindest eine Rückstellfeder zur Ausbildung einer Rückstellkraft auf die Gelenkarmvorrichtung umfasst, wobei die Rückstellkraft dann größer ist als eine auf die Rückstellfeder entgegengesetzt wirkende Gewichtskraft der Gelenkarmvorrichtung. Der Halterahmen kann beispielsweise Festlager für die Gelenkarmvorrichtung und den Verstellantrieb ausbilden beziehungsweise aufweisen. Insbesondere kann die Rückstellfeder oder der Verstellantrieb unmittelbar an einem Festlager am Halterahmen befestigt sein. Der Halterahmen kann auch besonders einfach an dem Mast oder der Unterführung sowie an einer Überdachung einer Haltestelle, einem Tunnel oder ähnlichen Einrichtungen, die von einem Fahrzeug unterfahren werden können, befestigt werden. Dadurch, dass die Positioniereinheit über einem Fahrzeug angeordnet sein kann, kann der Verstellantrieb als ein Senkantrieb zum Absenken des Kontaktelements ausgebildet sein und mechanisch mit der Federeinrichtung beziehungsweise der Rückstellfeder zusammenwirken. Nach einer Kontaktierung der Ladekontaktfläche mit dem Ladekontakt kann eine Rückführung des Ladekontakts in die Einfahrposition an der Positioniereinheit oberhalb des Fahrzeugs einfach durchgeführt werden, wenn die Federeinrichtung zumindest mit der einen Rückstellfeder die Rückstellkraft auf die Gelenkarmvorrichtung bewirkt. Dadurch, dass die Rückstellkraft dann größer sein kann als eine auf die Rückstellfeder entgegengesetzt wirkende Gewichtskraft der Gelenkarmvorrichtung, kann die Gelenkarmvorrichtung von der Kontaktposition in die Einfahrposition bewegt werden, ohne dass der Verstellantrieb aktiv ist beziehungsweise mit Energie versorgt wird. Auch wenn sich der Ladekontakt in der Einfahrposition befindet, wirkt die Rückstellkraft dann der Gewichtskraft entgegen und ist vorzugsweise geringfügig größer als diese, um ein Absinken beziehungsweise Ausfahren des Ladekontakts zu verhindern, wenn die Gelenkarmvorrichtung mit keiner weiteren Kraft beaufschlagt wird.

In einer nicht erfindungsgemäßen Ausführungsform kann die Positioniereinheit eine Haltvorrichtung zur Befestigung der Positioniereinheit auf dem Dach eines Fahrzeugs umfassen, wobei die Federeinrichtung zumindest eine Hubfeder zur Ausbildung einer Hubkraft auf die Gelenkarmvorrichtung umfassen kann, wobei die Hubkraft dann kleiner sein kann als eine auf die Hubfeder entgegengesetzt wirkende Gewichtskraft der Gelenkarmvorrichtung. Der Halterahmen kann ebenfalls Festlager für die Gelenkarmvorrichtung und die Antriebvorrichtung ausbilden beziehungsweise aufweisen, ist jedoch dann auf dem Dach des Fahrzeugs befestigt. Der Halterahmen kann über Dämpfer, Füße und/oder Isolatoren auf dem Dach einfach montiert werden. Die Positioniereinheit wird so auch besonders einfach auswechselbar. Wenn die Positioniereinheit auf dem Dach des Fahrzeugs befestigt ist, kann der Verstellantrieb einen Hubantrieb zum Ausfahren des Ladekontakts sein, der mechanisch mit der Federeinrichtung zusammenwirken kann. Auch hier kann eine Kontaktierung der Ladekontaktfläche mit dem Ladekontakt einfach durch ein Ausfahren des Ladekontakts in die Kontaktposition durchgeführt werden, wenn die Federeinrichtung zumindest die Hubfeder zur Ausbildung der Hubkraft umfasst, die zusammen mit der Verstellkraft des Verstellantriebs auf die Gelenkarmvorrichtung wirkt, wobei die Hubkraft kleiner sein kann als eine auf die Hubfeder entgegengesetzt wirkende Gewichtskraft der Gelenkarmvorrichtung. So kann eine Gewichtskraft der Gelenkarmvorrichtung und des an der Gelenkarmvorrichtung angeordneten Ladekontakts bewirken, dass sich die Gelenkarmvorrichtung von der Kontaktposition die Einfahrposition bewegt, ohne dass dies von dem Verstellantrieb initiiert wird. Die der Gewichtskraft entgegenwirkende Hubkraft ist vorzugsweise geringfügig kleiner als diese, um ein Absinken des Ladekontakts bei beispielsweise einem Stromausfall sicherzustellen. Weiter unterstützt die Hubkraft jedoch den Verstellantrieb, wenn dieser die Verstellkraft auf die Gelenkarmvorrichtung bei einem Ausfahren der Gelenkarmvorrichtung bewirkt, so dass nur noch eine kleine Verstellkraft aufgebracht werden muss.

Die Gelenkarmvorrichtung kann als ein Einarmsystem oder als ein Scherensystem, vorzugsweise mit einer Parallelogrammführung, oder als Pantograph ausgebildet sein. So kann das Gelenkarmsystem eine parallele Bewegung des Ladekontakts ausgehend von einer Einfahrposition des Ladekontakts bis hin zu der Kontaktposition an der Ladekontaktfläche ermöglichen. An der Gelenkarmvorrichtung können zusätzlich Dämpferelemente angeordnet sein, die einen ruckfreien Bewegungsablauf sicherstellen.

Die Antriebvorrichtung kann mit einem Datenbus eines Fahrzeuges koppelbar ausgebildet sein. So kann beispielsweise der Verstellantrieb unmittelbar über den Datenbus angesteuert werden. Die Sensoreinrichtung kann ebenfalls an den Datenbus angeschlossen sein, so dass die Regeleinrichtung an beliebiger Stelle im Fahrzeug angeordnet sein kann.

Bei dem erfindungsgemäßen Verfahren zur Ausbildung einer elektrisch leitenden Verbindung zwischen einer stationären Ladestation an einem Fahrzeug, insbesondere Elektrobus oder dergleichen, wird mittels der Positioniereinheit ein elektrischer Ladekontakt, den die Positioniereinheit aufweist, relativ zu einer Ladekontaktfläche bewegt und mit dieser kontaktiert, wobei eine Gelenkarmvorrichtung der Positioniereinheit von einer Antriebvorrichtung der Positioniereinheit angetrieben wird, wobei der Ladekontakt mittels der Gelenkarmvorrichtung zwischen einer Kontaktposition und zur Stromübertragung und einer Einfahrposition zur Stromunterbrechung positioniert wird, wobei mittels eines Feststellantriebs der Antriebsvorrichtung eine Verstellkraft ausgebildet wird, die auf die Gelenkarmvorrichtung wirkt, und wobei mittels einer Regeleinrichtung der Antriebvorrichtung der Verstellantrieb angesteuert wird, wobei mittels einer Sensoreinrichtung der Antriebvorrichtung die Ladekontaktfläche detektiert wird, wobei die Sensoreinrichtung mit der Regeleinrichtung gekoppelt ist, wobei eine Geschwindigkeit des Ladekontakts während einer Bewegung des Ladekontakts von der Einfahrposition in die Kontaktposition in Abhängigkeit eines Relativabstandes von Ladekontakt und Ladekontaktfläche von der Regeleinrichtung geregelt wird, wobei mittels einer weiteren Sensoreinrichtung der Antriebvorrichtung die Ladestation oder das Fahrzeug detektiert wird, wobei die Regeleinrichtung einen Relativabstand des Ladekontakts in der Einfahrposition und in der Kontaktposition bestimmt, wobei die Regeleinrichtung vor einem Stopp des Fahrzeugs an der Ladestation die Bewegung des Ladekontakts aus der Einfahrposition heraus initiiert. Die vorteilhaften Wirkungen das erfindungsgemäße Verfahren betreffend wird auf die Vorteilsbeschreibung der erfindungsgemäßen Positioniereinheit verwiesen.

Der Ladekontakt kann während einer Bewegung des Ladekontakts von der Einfahrposition in die Kontaktposition zunächst eine positive Beschleunigung und später eine negative Beschleunigung erfahren. Die negative Beschleunigung kann dann insbesondere nach einer Detektion der Ladekontaktfläche bzw. des Ladekontakts mit einem vorausbestimmten Relativabstand von Ladekontakt und Ladekontaktfläche auf den Ladekontakt wirken.

Während der Bewegung des Ladekontakts von der Einfahrposition in die Kontaktposition kann der Ladekontakt in einem ersten Bewegungsabschnitt mit einer konstanten und/oder maximalen Geschwindigkeit bewegt werden, und in einem zweiten Bewegungsabschnitt, vor einem Erreichen der Kontaktposition, mit einer relativ verminderten Geschwindigkeit bewegt werden. Das heißt, dass der Ladekontakt zunächst möglichst schnell von der Einfahrposition ausgefahren wird um ihn, kurz vor der Kontaktposition abzubremsen und mit der Ladekontaktfläche zu kontaktieren. Diese Regelung des Ausfahrens des Ladekontakts ermöglicht es, eine Kontaktierung von Ladekontakt und Ladekontaktfläche schneller als bisher herbeizuführen, wodurch eine Ladezeit vorteilhaft verlängert werden kann. Weiter kann der Ladekontakt vor dem Erreichen der Ladekontaktfläche derart abgebremst bzw. kann seine Geschwindigkeit so vermindert werden, dass der Ladekontakt und die Ladekontaktfläche nur vergleichsweise langsam kontaktiert werden. Die Wahrscheinlichkeit einer mechanischen Beschädigung von Ladekontakt und Ladekontaktfläche sowie ein Verschleiß kann so herabgesetzt werden. Weiter kommt es dann kaum noch zu einer störenden Geräuschentwicklung beim Kontaktieren.

Die konstante oder maximale Geschwindigkeit kann ≥ 100 mm pro Sekunde, bevorzugt ≥ 360 mm pro Sekunde, besonders bevorzugt ≥ 500 mm pro Sekunde betragen.

Die verminderte Geschwindigkeit bei dem Erreichen der Kontaktposition kann zumindest 70 %, bevorzugt 50 %, besonders bevorzugt 30 % der konstanten und/oder maximalen Geschwindigkeit oder 0 mm pro Sekunde betragen. Somit ist dann sichergestellt, dass der Ladekontakt auf die Ladekontaktfläche nicht mit maximaler Geschwindigkeit auftrifft. Durch die Bestimmung des Relativabstandes kann die Regeleinrichtung auch die verminderte Geschwindigkeit so weit absenken, dass diese bei dem Erreichen der Kontaktposition 0 mm pro Sekunde beträgt bzw. der Ladekontakt angehalten wird.

Die Geschwindigkeit kann vor dem Erreichen der Kontaktposition bei einem Relativabstand von ≤ 150 mm, bevorzugt ≤ 100 mm, besonders bevorzugt ≤ 50 mm vermindert werden. Dieser Relativabstand liegt noch im Erfassungsbereich unterschiedlichster Sensoren und kann so auch leicht von der Sensoreinrichtung bestimmt werden. Auch kann dann der Ladekontakt über einen großen Streckenabschnitt seines Weges in Richtung zu der Ladekontaktfläche mit hoher Geschwindigkeit bewegt werden.

Besonders vorteilhaft ist es, wenn die Geschwindigkeit vor dem Erreichen der Kontaktposition entsprechend einer linearen Funktion oder einer Näherungsfunktion vermindert werden kann. Die Regeleinrichtung kann ein Regelglied aufweisen, welches diese Minderung der Geschwindigkeit nach beispielsweise einem Signal der Sensoreinrichtung bei Unterschreiten eines definierten Relativabstandes durch den Ladekontakt regelt.

Auch kann zumindest ein Sensor der Sensoreinrichtung kontinuierlich einen Abstandswert oder einen definierten Schwellenwert des Relativabstandes der Regeleinrichtung übermitteln. So kann vorgesehen sein, dass der Sensor permanent den Relativabstand bzw. einen Ist-Wert des Relativabstandes an die Regeleinrichtung übermittelt. Alternativ kann der Sensor lediglich bei Unterschreiten des zuvor definierten Relativabstandes ein Signal an die Regeleinrichtung zumindest einmalig übermitteln. Nach dem Empfang des Signals kann die Regeleinrichtung dann die Geschwindigkeit des Ladekontakts vermindern.

Von dem Verstellantrieb kann eine Kontaktkraft auf die Ladekontaktfläche ausgeübt werden, wobei ein Elektromotor des Verstellantriebs mittels der Regeleinrichtung angesteuert werden kann.

Ein Drehmoment des Elektromotors kann von der Regeleinrichtung erfasst werden, wobei die Kontaktkraft von der Regeleinrichtung in Abhängigkeit des Drehmoments des Elektromotors geregelt werden kann.

Die Kontaktkraft kann unabhängig von einem Relativabstand der Ladekontaktfläche beziehungsweise der Kontaktposition zu der Einfahrposition der Positioniereinheit ausgebildet werden. So wird es möglich, auch Fahrzeuge mit unterschiedlichen Höhen relativ zu einer Fahrbahn mit der Positioniereinheit zu kontaktieren.

In der Kontaktposition kann während einer Änderung eines Relativabstandes der Ladekontaktfläche beziehungsweise der Kontaktposition zu der Einfahrposition der Positioniereinheit die Kontaktkraft konstant ausgebildet werden. Eine Änderung eines Relativabstands eines Fahrzeugs zu einer Fahrbahn hat auch stets eine Änderung des Relativabstands der Kontaktposition zu der Einfahrposition zur Folge. Eine Änderung des Relativabstands kann durch eine Absenkung des Fahrzeugs über ein Fahrwerk oder durch eine Beladung des Fahrzeugs hervorgerufen werden. Dadurch, dass die Kontaktkraft relativ zur Verstellkraft vergleichsweise groß ist, kann die Kontaktkraft im Wesentlichen konstant ausgebildet werden, auch wenn der Relativabstand verändert wird. Eine konstante Kontaktkraft kann noch einfacher unabhängig von dem Relativabstand ausgebildet werden, wenn die Kontaktkraft von der Regeleinrichtung in Abhängigkeit des Drehmoments des Elektromotors geregelt wird. Vergrößert sich der Relativabstand durch ein Absenken des Fahrzeugs, so verringert sich die Kontaktkraft, und damit unmittelbar ein Drehmoment des Elektromotors, welches von der Regeleinrichtung dann wieder erhöht wird, woraus sich eine konstante Kontaktkraft ergibt. Umgekehrt führt eine Verkürzung des Relativabstandes zu einer Erhöhung einer Kontaktkraft und damit des Drehmoments, dem die Regeleinrichtung durch eine Verminderung des Drehmoments entgegenwirken kann.

Mittels der Regeleinrichtung kann das Drehmoment des Elektromotors in Abhängigkeit einer Stellung der Gelenkarmvorrichtung oder des Verstellantriebs eingestellt werden. Dadurch ist es dann möglich, eine unmittelbare Kraftwirkung auf die Gelenkarmvorrichtung und gegebenenfalls das Kontaktelement an eine jeweilige Stellung der Gelenkarmvorrichtung optimal anzupassen und somit auch die Kraftwirkung auf die Ladekontaktfläche unabhängig von der Stellung der Gelenkarmvorrichtung im Wesentlichen konstant auszubilden. Beispielsweise kann über einen Wegsensor eine Stellung der Gelenkarmvorrichtung detektiert und das Drehmoment von der Regeleinrichtung in Abhängigkeit der Stellung bereits angepasst werden, so dass eine Regelung des Drehmoments zur Einstellung der Kontaktkraft keine großen Drehmomentsprünge mehr erfordert.

Auch kann mittels der Regeleinrichtung bei Überschreiten eines Grenzwertes des Drehmoments ein Erreichen der Kontaktposition detektiert werden. In der Kontaktposition trifft der Ladekontakt auf die Ladekontaktfläche, wodurch sich das Drehmoment des Elektromotors wesentlich erhöht. Diese Erhöhung des Drehmoments kann von der Regeleinrichtung als das Erreichen der Kontaktposition detektiert werden. Beispielsweise kann dann eine eventuell vorhandene Drehzahlregelung des Elektromotors ausgeschaltet werden, da dann nur noch ein Nachregeln des Drehmoments des Elektromotors in der Kontaktposition erforderlich ist. Auch kann in der Kontaktposition dann über die Regeleinrichtung beispielsweise ein Freigabesignal zur Energieübertragung von einer Ladestation abgegeben werden. Weitere Sensoren zur Erfassung der Kontaktposition sind daher nicht erforderlich.

Mittels der Regeleinrichtung kann das Drehmoment des Elektromotors bei Erreichen eines Sollwertes des Drehmoments begrenzt und konstant aufrechterhalten werden. Durch die Begrenzung des Drehmoments wird zunächst verhindert, dass der Elektromotor überlastet wird. Weiter wird es dann auch möglich, die Kontaktkraft konstant auszubilden. Gleiches betrifft eine Ausfahr- und Einfahrgeschwindigkeit des Ladekontaktes, die dann begrenzt gesteigert werden kann.

Mittels der Regeleinrichtung kann der Sollwert des Drehmoments in einem Toleranzbereich von +/- 10% geregelt werden. Dieser Toleranzbereich ist vollkommen ausreichend zur Ausbildung einer im Wesentlichen konstanten Kontaktkraft, so dass auf eine besonders genaue Erfassung des Drehmoments des Elektromotors durch die Regeleinrichtung verzichtet werden kann. Die Regeleinrichtung wird so auch kostengünstiger ausbildbar.

Mittels der Regeleinrichtung kann eine maximale Drehzahl des Elektromotors nach einer Laufzeit des Elektromotors von 0 bis 7 Sekunden, vorzugsweise 1 bis 3 Sekunden, erreicht werden. Dadurch können eine unmittelbare Kraftwirkung sowie Schwingungen des Verstellantriebs und der Gelenkarmvorrichtung vermieden beziehungsweise vermindert werden. Das so geregelte Anlaufen des Elektromotors bewirkt dann ebenfalls eine Verlängerung einer Lebensdauer der Positionierreinheit.

Mittels der Regeleinrichtung kann eine Drehzahl des Elektromotors derart geregelt werden, dass der Ladekontakt zumindest abschnittsweise mit einer konstanten Geschwindigkeit bewegt wird. Beispielsweise kann vorgesehen sein, dass der Ladekontakt ausgehend von der Einfahrposition mit einer zunächst positiven Beschleunigung ausgefahren beziehungsweise mit einer negativen Beschleunigung eingefahren wird, jedoch ein überwiegender Abschnitt einer Strecke einer Bewegung des Ladekontakts in die Kontaktposition mit konstanter Geschwindigkeit erfolgt.

Erfindungsgemäß wird mittels einer weiteren Sensoreinrichtung der Antriebvorrichtung die Ladestation oder das Fahrzeug detektiert, wobei die Regeleinrichtung einen Relativabstand des Ladekontakts in der Einfahrposition und in der Kontaktposition bestimmt, wobei die Regeleinrichtung vor einem Stopp des Fahrzeugs an der Ladestation die Bewegung des Ladekontakts aus der Einfahrposition heraus initiiert. Demnach kann mittels der weiteren Sensoreinrichtung ein horizontaler Abstand von Fahrzeug und Ladestation bestimmt werden, wobei bei einem Unterschreiten eines Schwellenwerts des Abstandes der Ladekontakt bereits aus der Einfahrposition kontrolliert ausgefahren werden kann, so dass sich der Ladekontakt, wenn sich das Fahrzeug unterhalb der Ladestation in der zum Laden vorgesehenen Position befindet, bereits dicht unterhalb der Ladekontaktfläche oder umgekehrt befindet. So kann eine Ladezeit noch weiter vorteilhaft verlängert werden. Umgekehrt kann natürlich auch die Ladestation den Ladekontakt, und das Fahrzeug die Ladekontaktfläche aufweisen. Die weitere Sensoreinrichtung kann ebenfalls zumindest einen der vorgenannten Sensoren aufweisen. Gegebenenfalls kann die weitere Sensoreinrichtung auch in der Sensoreinrichtung integriert sein.

Die Regeleinrichtung kann eine relative Höhe des Ladekontakts und/oder der Kontaktposition über einem Fahrzeug bestimmen, wobei die Regeleinrichtung eine Höhe des Fahrzeugs über einen Fahrweg bestimmen kann. So ist es vorteilhaft, wenn eine Höhe des Fahrzeugs über dem Fahrweg bekannt ist, insbesondere da diese Höhe mit einer Beladung des Fahrzeugs stark variieren kann. Die Höhe kann beispielsweise über ein Fahrwerk des Fahrzeugs oder auch über speziell zu diesem Zweck ausgebildete Sensoren bestimmt werden. Aus der Höhe des Fahrzeugs über dem Fahrweg und der Position des Ladekontakts relativ zum Fahrzeug in der Einfahrposition kann eine Höhe des Ladekontakts relativ zu dem Fahrweg mittels der Regeleinrichtung berechnet werden. Sofern die Höhe der Ladekontaktfläche über dem Fahrweg bekannt ist, wenn es sich beispielsweise um eine Ladestation handelt, kann bereits eine Ausfahrgeschwindigkeit bzw. maximale Geschwindigkeit des Ladekontakts beim Ausfahren aus der Einfahrposition geregelt werden, bevor das Fahrzeug die Ladestation erreicht hat.

Weitere vorteilhafte Ausführungsformen des Verfahrens ergeben sich aus den auf den Vorrichtungsanspruch 1 rückbezogenen Unteransprüchen.

Nachfolgend werden bevorzugte Ausführungsformen der Erfindung unter Bezugnahme auf die beigefügten Zeichnungen näher erläutert.

Es zeigen:
- **Fig. 1**: eine erste Ausführungsform einer Positioniereinheit in einer Einfahrposition in einer Seitenansicht;
- **Fig. 2**: die Positioniereinheit in einer Kontaktposition in der Seitenansicht;
- **Fig. 3**: eine zweite Ausführungsform einer Positioniereinheit in einer Kontaktposition in einer perspektivischen Ansicht;
- **Fig. 4**: eine Detailansicht aus **Fig. 3****;**
- **Fig. 5**: die Positioniereinheit aus **Fig. 3** in einer Einfahrposition in einer perspektivischen Ansicht;
- **Fig. 6**: die Positioniereinheit aus **Fig. 3** in der Kontaktposition in einer perspektivischen Ansicht.

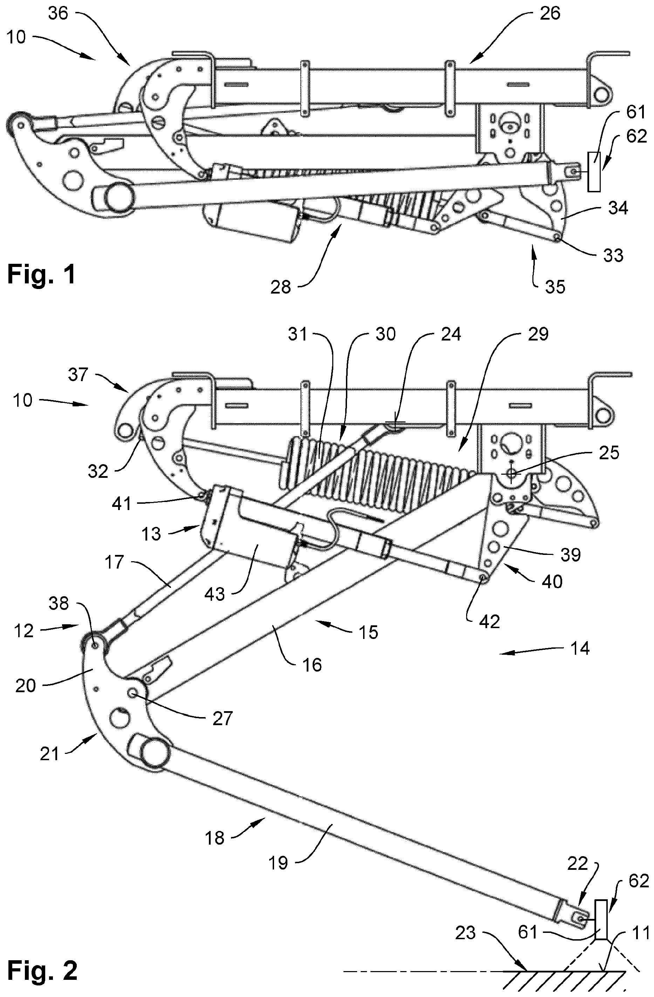

Eine Zusammenschau der **Fig. 1** und **2** zeigt eine erste Ausführungsform einer Positioniereinheit 10 in verschiedenen Positionen. Eine Kontaktierung einer Ladekontaktfläche 11 ist hier lediglich symbolisch veranschaulicht. Die Positioniereinheit 10 umfasst eine Gelenkarmvorrichtung 12 und einen Verstellantrieb 13 zum Antrieb der Gelenkarmvorrichtung 12. Die Gelenkarmvorrichtung 12 ist als ein Einarmsystem 14 ausgebildet und umfasst eine Oberschere 15 mit einem Oberscherenarm 16 und einer oberen Kuppelstange 17 sowie eine Unterschere 18 mit einem Unterscherenarm 19 und einer unteren Kuppelstange 20. An dem Oberscherenarm 16 ist ein oberes Koppelglied 21 schwenkbar befestigt, so dass ein Halter 22 der Positioniereinheit 10 für einen hier nicht dargestellten elektrischen Ladekontakt der Positioniereinheit 10 stets parallel zu einer horizontalen Ebene 23 bewegt werden kann. Zu diesem Zweck ist das obere Koppelglied 21 mit der oberen Kuppelstange 17 über eine Achse 38 verbunden. Der Unterscherenarm 19 und die untere Kuppelstange 20 sind jeweils an Festlagern 24 beziehungsweise 25 eines Halterahmens 26 der Positioniereinheit 10 schwenkbar befestigt. Der Unterscherenarm 19 ist über eine Achse 27 mit dem Oberscherenarm 16 schwenkbar verbunden. Eine Schwenkbewegung des Oberscherenarms 16 führt folglich zu einer parallelen Bewegung des Halters 22 relativ zur horizontalen Ebene 23.

Der Verstellantrieb 13 ist als ein Linearantrieb 28 ausgebildet. Eine Federeinrichtung 29 der Positioniereinheit 10 ist mit einer Rückstellfeder 30, die als eine Zugfeder 31 ausgebildet ist, ausgebildet. Die Zugfeder 31 ist an einem Festlager 32 an dem Halterahmen 26 und an einer Achse 33 eines Hebels 34 befestigt. Der Hebel 34 bildet zusammen mit der Achse 33 und der Zugfeder 31 ein Rückstellgetriebe 35 aus. Je nach Position der Gelenkarmvorrichtung 12 wird der mit dem Unterscherenarm 19 drehfest verbundene Hebel 34 relativ zur Zugfeder 31 verschwenkt, so dass eine wirksame Länge des Hebels 34 verkürzt oder verlängert wird. In einer Einfahrposition 36 und in einer Kontaktposition 37 der Positioniereinheit 10 wirkt die Zugfeder 31 unmittelbar auf die Achse 33. Wird die Gelenkarmvorrichtung 12 noch weiter nach unten ausgefahren, wird eine wirksame Länge des Hebels 34 durch Verschwenken desselben wesentlich verkürzt. So ist es möglich, die Zugfeder 31 beziehungsweise dessen wirksame Rückstellkraft an eine Position der Positioniereinheit 10 anzupassen. Die Gelenkarmvorrichtung 12 weist zusammen mit dem Verstellantrieb 13 eine konstruktionsbedingte Gewichtskraft einschließlich eines hier nicht dargestellten Ladekontaktes auf, die auf den Ladekontakt beziehungsweise den Halter 22 wirkt. Die Zugfeder 31 bewirkt eine Federkraft beziehungsweise eine Rückstellkraft, die die Gewichtskraft überschreitet, so dass unabhängig von einer Position der Positioniereinheit 10 auch bei einem Stromausfall eine Rückholung der Positioniereinheit 10 in die Einfahrposition 36 stets sichergestellt ist.

An der Gelenkarmvorrichtung 12 beziehungsweise dem Unterscherenarm 19 ist ein Hebel 39 fest fixiert, der ein Stellgetriebe 40 für die Gelenkarmvorrichtung 12 ausbildet. An einer Achse 42 des Hebels 39 ist der Linearantrieb 28 schwenkbar befestigt. Der Linearantrieb 28 ist weiter über eine Achse 41 fest mit dem Halterahmen 26 verbunden. Der Linearantrieb 28 wird durch einen Elektromotor 43 angetrieben und ist nicht selbsthemmend ausgebildet. So kann bei beispielsweise einem Stromausfall die Zugfeder 31 die Gelenkarmvorrichtung 12 von der Kontaktposition 37 in die Einfahrposition 36 selbsttätig bewegen, wodurch der Linearantrieb 28 eingefahren wird. Der Linearantrieb 28 dient daher hier auch zur Dämpfung einer Bewegung der Gelenkarmvorrichtung 12. Weiter umfasst hier die Positioniereinheit 10 eine Regeleinrichtung, die hier nicht näher dargestellt ist, und an die der Elektromotor 43 angeschlossen ist. Mittels der Regeleinrichtung wird ein Drehmoment des Elektromotors 43 erfasst, wobei die Regeleinrichtung das Drehmoment des Elektromotors 43 in Abhängigkeit einer Kontaktkraft, die von dem hier nicht dargestellten Ladekontakt auf die Ladekontaktfläche 11 ausgeübt wird, bewirkt wird. Die Kontaktkraft ist zur Ausbildung eines elektrischen Kontakts ausreichend hoch und kann in der Kontaktposition 37 sowie in jeder anderen beliebigen Kontaktposition im Wesentlichen konstant beziehungsweise in jeweils gleicher Höhe ausgebildet werden, dadurch, dass das Drehmoment des Elektromotors 43 geregelt wird.

Mittels der hier nicht dargestellten Regeleinrichtung mittels ist der Verstellantrieb 13 bzw. der Elektromotor 43 ansteuerbar. An dem Halter 22 des Unterscherenarms 19 ist hier ein Sensor 61 einer Sensoreinrichtung 62 angeordnet mittels dem ein Relativabstand vom Sensor 61 und Ebene 23 bzw. Ladekontaktfläche 11 detektierbar ist. Somit kann auch ein Relativabstand des hier nicht dargestellten Ladekontakts zu der Ladekontaktfläche 11 bestimmt werden. Da die Sensoreinrichtung 62 mit der Regeleinrichtung gekoppelt ist, kann eine Geschwindigkeit des Ladekontakts während einer Bewegung des Ladekontakts von der Einfahrposition 36 in die Kontaktposition 37 in Abhängigkeit eines gemessenen bzw. detektierten Relativabstandes von Ladekontakt und Ladekontaktfläche 11 von der Regeleinrichtung geregelt werden.

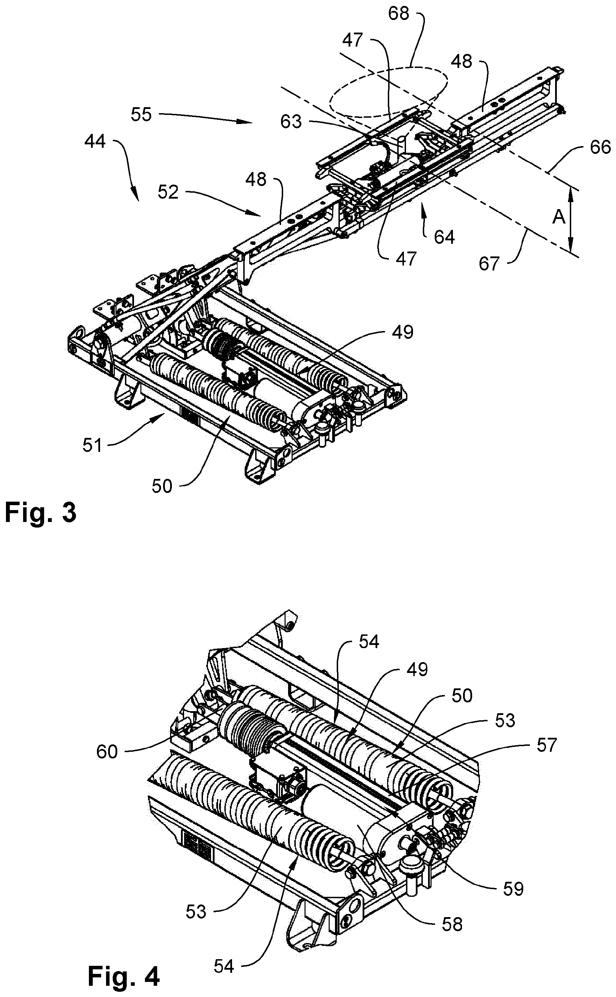

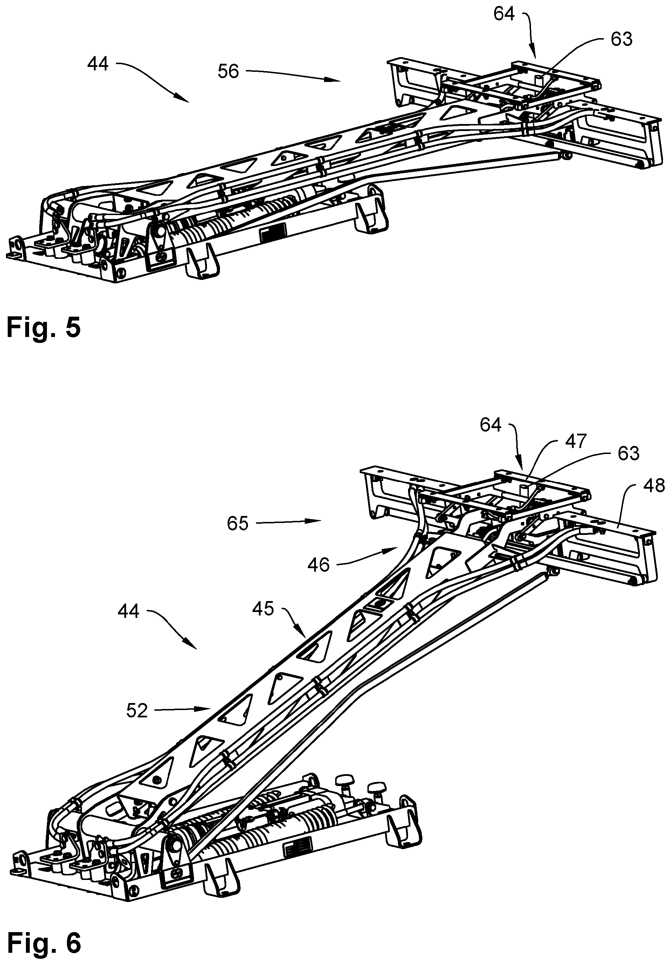

Eine Zusammenschau der Fig. 3 bis 6 zeigt eine zweite Ausführungsform einer Positioniereinheit 44, die auf einem Dach eines hier nicht dargestellten, elektrisch angetriebenen Fahrzeugs befestigt ist. Die Positioniereinheit 44 umfasst im Wesentlichen eine Gelenkarmvorrichtung 45, an deren Ende 46 Ladekontakte 47 und 48 zur Kontaktierung einer hier nicht näher dargestellten Ladekontaktfläche oberhalb des Fahrzeugs angeordnet sind. Weiter umfasst die Positioniereinheit 44 einen Verstellantrieb 49 und eine Federeinrichtung 50 sowie einen Halterahmen 51. Die Gelenkarmvorrichtung 45 ist als ein Einarmsystem 52 ähnlich dem zuvor beschriebenen Einarmsystem ausgebildet. Die Federeinrichtung 50 umfasst zwei Zugfedern 53, die als Hubfedern 54 ausgebildet sind und eine Hubkraft auf die Gelenkarmvorrichtung 45 bewirken. Die Hubkraft ist dabei so bemessen, dass eine Gewichtskraft der Gelenkarmvorrichtung 45 zusammen mit den Ladekontakten 47 und 48 größer ist als die Hubkraft, so dass bei beispielsweise einem Stromausfall die Gelenkarmvorrichtung 45 stets von einer Arbeitsposition 55 bzw. einer hier nicht dargestellten Kontaktposition in eine Einfahrposition 56 absinkt. Der Verstellantrieb 49 umfasst daher einen nicht selbsthemmenden Linearantrieb 57 mit einem Elektromotor 58 der an eine hier nicht dargestellte Regeleinrichtung der Positioniereinheit 44 angeschlossen ist, und von dieser geregelt wird. Die Regeleinrichtung erfasst ein Drehmoment des Elektromotors 58, wobei die Regeleinrichtung das Drehmoment des Elektromotors 58 so regelt, dass eine definierte Kontaktkraft an den Ladekontakten 47 und 48 ausgebildet wird. Der Linearantrieb 57 umfasst seinerseits eine hier nicht dargestellte Trapezgewindespindel, die hier in einem Gehäuse 59 des Linearantriebs 57 aufgenommen ist und auf eine Antriebsstange 60 über eine Mutter wirkt. Durch eine Bewegung der Antriebsstange 60 kann somit die Gelenkarmvorrichtung in die Kontaktposition beziehungsweise in die Einfahrposition 56 bewegt werden.

Auch die Positioniereinheit 44 verfügt über einen Sensor 63 einer Sensoreinrichtung 64, wobei der Sensor 63 benachbart der Ladekontakte 47 an dem Einarmsystem 52 befestigt ist. Insbesondere in der Fig. 3 ist die Positioniereinheit 44 bzw. das Einarmsystem 52 in einer Arbeitsposition 55 dargestellt. Die Arbeitsposition 55 ist von einer Kontaktposition 65 so weit entfernt, dass sich die Ladekontakte 47 und 48 noch in einem Relativabstand A von einer hier nicht näher dargestellten Ladekontaktfläche befinden. Die Ladekontaktfläche ist mit einer Linie 66 und die Arbeitsposition 55 mit einer relativ dazu parallel angeordneten Linie 67 angedeutet. Die Ladekontaktfläche befindet sich hier in einem Erfassungsbereich 68 des Sensors 63, so dass eine Geschwindigkeit der Ladekontakte 47 und 48 während einer Bewegung von der Einfahrposition 56 in die Kontaktposition 65 in Abhängigkeit des Relativabstandes A von den Ladekontakten 47 und 48 zu der Ladekontaktfläche bzw. Linie 66 von der Regeleinrichtung geregelt werden kann.

## Patentansprüche

1. Positioniereinheit (10) zur Ausbildung einer elektrisch leitenden Verbindung zwischen einer stationären Ladestation und einem Fahrzeug, insbesondere Elektrobus oder dergleichen, wobei mittels der Positioniereinheit ein elektrischer Ladekontakt, den die Positioniereinheit aufweist, relativ zu einer Ladekontaktfläche (11) bewegbar und mit dieser kontaktierbar ist, wobei die Positioniereinheit eine Gelenkarmvorrichtung (12) und eine Antriebvorrichtung zum Antrieb der Gelenkarmvorrichtung aufweist, wobei der Ladekontakt mittels der Gelenkarmvorrichtung zwischen einer Kontaktposition (37) zur Stromübertragung und einer Einfahrposition (36) zur Stromunterbrechung positionierbar ist, wobei die Antriebvorrichtung einen Verstellantrieb (13) zur Ausbildung einer auf die Gelenkarmvorrichtung wirkenden Verstellkraft aufweist, wobei die Antriebvorrichtung eine Regeleinrichtung aufweist, mittels der der Verstellantrieb ansteuerbar ist,
wobei die Antriebvorrichtung eine Sensoreinrichtung (62) aufweist, mittels der die Ladekontaktfläche detektierbar ist, wobei die Sensoreinrichtung mit der Regeleinrichtung gekoppelt ist, wobei eine Geschwindigkeit des Ladekontakts während einer Bewegung des Ladekontakts von der Einfahrposition in die Kontaktposition in Abhängigkeit eines Relativabstandes (A) von Ladekontakt und Ladekontaktfläche von der Regeleinrichtung regelbar ist,
wobei die Antriebvorrichtung eine mit dem Verstellantrieb mechanisch zusammenwirkende Federeinrichtung (29) aufweist, wobei die Positioniereinheit eine Haltevorrichtung (26) zur Befestigung der Positioniereinheit oberhalb eines Fahrzeugs an einem Mast oder einer Unterquerung umfasst, wobei die Federeinrichtung zumindest eine Rückstellfeder zur Ausbildung einer Rückstellkraft auf die Gelenkarmvorrichtung umfasst, wobei die Rückstellkraft größer ist als eine auf die Rückstellfeder entgegengesetzt wirkende Gewichtskraft der Gelenkarmvorrichtung.

2. Positioniereinheit nach Anspruch 1,
**dadurch gekennzeichnet,**
**dass** von dem Verstellantrieb (13) eine Kontaktkraft auf die Ladekontaktfläche (11) ausbildbar ist, wobei der Verstellantrieb die Regeleinrichtung und einen Elektromotor (43) aufweist, der mittels der Regeleinrichtung ansteuerbar ist.

3. Positioniereinheit nach Anspruch 1 oder 2,
**dadurch gekennzeichnet,**
**dass** der Verstellantrieb (13) ein Linearantrieb (28), bevorzugt ein Spindeltrieb, besonders bevorzugt ein selbsthemmungsfreier Spindeltrieb ist.

4. Positioniereinheit nach einem der vorangehenden Ansprüche,
**dadurch gekennzeichnet,**
**dass** die Sensoreinrichtung zumindest einen Sensor (61) aufweist, wobei der Sensor ein mechanischer Schalter, ein induktiver Sensor, ein kapazitiver Sensor, ein magnetischer Sensor, ein Ultraschallsensor, ein Radarsensor und/oder ein optischer Sensor ist.

5. Positioniereinheit nach Anspruch 4,
**dadurch gekennzeichnet,**
**dass** der Sensor (61) an der Gelenkarmvorrichtung (12), insbesondere benachbart dem Ladekontakt, angeordnet ist.

6. Positioniereinheit nach einem der vorangehenden Ansprüche,
**dadurch gekennzeichnet,**
**dass** der Verstellantrieb (13) und/oder die Gelenkarmvorrichtung (12) einen Wegsensor und/oder einen Positionssensor aufweist.

7. Positioniereinheit nach einem der vorangehenden Ansprüche,
**dadurch gekennzeichnet,**
**dass** die Antriebvorrichtung mit einem Datenbus eines Fahrzeuges koppelbar ausgebildet ist.

8. Verfahren zur Ausbildung einer elektrisch leitenden Verbindung zwischen einer stationären Ladestation und einem Fahrzeug, insbesondere Elektrobus oder dergleichen, wobei mittels einer Positioniereinheit (10, 44) ein elektrischer Ladekontakt (47, 48), den die Positioniereinheit aufweist, relativ zu einer Ladekontaktfläche (11) bewegt und mit dieser kontaktiert wird, wobei eine Gelenkarmvorrichtung (12, 45) der Positioniereinheit von einer Antriebvorrichtung der Positioniereinheit angetrieben wird, wobei der Ladekontakt mittels der Gelenkarmvorrichtung zwischen einer Kontaktposition (37, 65) zur Stromübertragung und einer Einfahrposition (36, 56) zur Stromunterbrechung positioniert wird, wobei mittels eines Verstellantriebs (13, 49) der Antriebvorrichtung eine Verstellkraft ausgebildet wird, die auf die Gelenkarmvorrichtung wirkt, und wobei mittels einer Regeleinrichtung der Antriebvorrichtung der Verstellantrieb angesteuert wird,
wobei mittels einer Sensoreinrichtung (62, 64) der Antriebvorrichtung die Ladekontaktfläche detektiert wird, wobei die Sensoreinrichtung mit der Regeleinrichtung gekoppelt ist, wobei eine Geschwindigkeit des Ladekontakts während einer Bewegung des Ladekontakts von der Einfahrposition in die Kontaktposition in Abhängigkeit eines Relativabstandes (A) von Ladekontakt und Ladekontaktfläche von der Regeleinrichtung geregelt wird,
**dadurch gekennzeichnet,**
**dass** mittels einer weiteren Sensoreinrichtung der Antriebvorrichtung die Ladestation oder das Fahrzeug detektiert wird, wobei die Regeleinrichtung einen Relativabstand des Ladekontakts in der Einfahrposition und in der Kontaktposition bestimmt, wobei die Regeleinrichtung vor einem Stopp des Fahrzeugs an der Ladestation die Bewegung des Ladekontakts aus der Einfahrposition heraus initiiert.

9. Verfahren nach Anspruch 8,
**dadurch gekennzeichnet,**
**dass** der Ladekontakt (47, 48) während einer Bewegung des Ladekontakts von der Einfahrposition (36, 56) in die Kontaktposition zunächst eine positive Beschleunigung und später eine negative Beschleunigung erfährt.

10. Verfahren nach Anspruch 8 oder 9,
**dadurch gekennzeichnet,**
**dass** während der Bewegung des Ladekontakts (47, 48) von der Einfahrposition (36, 56) in die Kontaktposition (37, 65) der Ladekontakt (47, 48) in einem ersten Bewegungsabschnitt mit einer konstanten und/oder maximalen Geschwindigkeit bewegt wird, und in einem zweiten Bewegungsabschnitt, vor einem Erreichen der Kontaktposition, mit einer relativ verminderten Geschwindigkeit bewegt wird.

11. Verfahren nach Anspruch 10,
**dadurch gekennzeichnet,**
**dass** die konstante oder maximale Geschwindigkeit ≥ 100 mm/s, bevorzugt ≥ 360 mm/s, besonders bevorzugt ≥ 500 mm/s beträgt.

12. Verfahren nach Anspruch 10 oder 11,
**dadurch gekennzeichnet,**
**dass** die verminderte Geschwindigkeit bei dem Erreichen der Kontaktposition zumindest 70%, bevorzugt 50%, besonders bevorzugt 30% der konstanten und/oder maximalen Geschwindigkeit oder 0 mm/s beträgt.

13. Verfahren nach einem der Ansprüche 8 bis 12,
**dadurch gekennzeichnet,**
**dass** die Geschwindigkeit vor dem Erreichen der Kontaktposition (37, 65) bei einem Relativabstand (A) von ≤ 150 mm, bevorzugt ≤ 100 mm, besonders bevorzugt ≤ 50 mm vermindert wird.

14. Verfahren nach einem der Ansprüche 8 bis 13,
**dadurch gekennzeichnet,**
**dass** die Geschwindigkeit vor dem Erreichen der Kontaktposition (37, 65) entsprechend einer linearen Funktion oder einer Näherungsfunktion vermindert wird.

15. Verfahren nach einem der Ansprüche 8 bis 14,
**dadurch gekennzeichnet,**
**dass** zumindest ein Sensor (61, 63) der Sensoreinrichtung (62, 64) kontinuierlich einen Abstandswert oder einen definierten Schwellenwert des Relativabstandes (A) der Regeleinrichtung übermittelt.

16. Verfahren nach einem der Ansprüche 8 bis 15,
**dadurch gekennzeichnet,**
**dass** von dem Verstellantrieb (13, 49) eine Kontaktkraft auf die Ladekontaktfläche (11) ausgeübt wird, wobei ein Elektromotor (43,58) des Verstellantriebs mittels der Regeleinrichtung angesteuert wird.

17. Verfahren nach Anspruch 16,
**dadurch gekennzeichnet,**
**dass** ein Drehmoment des Elektromotors (43, 58) von der Regeleinrichtung erfasst wird, wobei die Kontaktkraft von der Regeleinrichtung in Abhängigkeit des Drehmoments des Elektromotors geregelt wird.

18. Verfahren nach einem der Ansprüche 8 bis 17,
**dadurch gekennzeichnet,**
**dass** die Regeleinrichtung eine relative Höhe des Ladekontakts (47, 48) und/oder der Kontaktposition (37, 65) über einem Fahrweg bestimmt, wobei die Regeleinrichtung eine Höhe des Fahrzeugs über dem Fahrweg bestimmt.

## Claims

1. A positioning unit (10) for forming an electrically conductive connection between a stationary charging station and a vehicle, in particular an electric bus or similar, wherein an electrical charging contact of the positioning unit can be moved relative to a charging contact surface (11) and contacted with the same by means of the positioning unit, wherein the positioning unit has an articulated arm device (12) and a drive device for driving the articulated arm device, wherein the charging contact can be positioned between a contact position (37) for power transmission and a retracted position (36) for power interruption by means of the articulated arm device, wherein the drive device has an adjustment drive (13) for forming an adjustment force acting on the articulated arm device, wherein the drive device has a control device by means of which the adjustment drive can be actuated,
wherein the drive device has a sensor device (62) by means of which the charging contact surface can be detected, wherein the sensor device is coupled with the control device, wherein a speed of the charging contact during movement of the charging contact from the retracted position into the contact position can be controlled by the control device in accordance with a relative distance (A) between the charging contact and the charging contact surface,
wherein the drive device has a spring device (29) mechanically cooperating with the adjustment drive, wherein the positioning unit comprises a holding device (26) for fastening the positioning unit above a vehicle on a pole or an underpass, wherein the spring device has at least one restoring spring for forming a restoring force acting on the articulated arm device, wherein the restoring force is greater than a gravitational force of the articulated arm device acting on the restoring spring in the opposite direction.

2. The positioning unit of claim 1,
**characterized in that**
a contact force acting on the charging contact surface (11) can be formed by the adjustment drive (13), wherein the adjustment drive has the control device and an electric motor (43), which can be actuated by the control device.

3. The positioning unit of claims 1 or 2,
**characterized in that**
the adjustment drive (13) is a linear drive (28), preferably a spindle drive, particularly preferably a spindle drive without self-locking.

4. The positioning unit of any one of the preceding claims,
**characterized in that**
the sensor device has at least one sensor (61), the sensor being a mechanical switch, an inductive sensor, a capacitive sensor, a magnetic sensor, an ultrasonic sensor, a radar sensor and/or an optical sensor.

5. The positioning unit of claim 4,
**characterized in that**
the sensor (61) is disposed on the articulated arm device (12), in particular adjacent to the charging contact.

6. The positioning unit of any one of the preceding claims,
**characterized in that**
the adjustment drive (13) and/or the articulated arm device (12) has a displacement sensor and/or a position sensor.

7. The positioning unit of any one of the preceding claims,
**characterized in that**
the drive device is configured for coupling with a data bus of a vehicle.

8. A method for forming an electrically conductive connection between a stationary charging station and a vehicle, in particular an electric bus or similar, wherein an electrical charging contact (47, 48) of a positioning unit (10, 44) is moved relative to a charging contact surface (11) and contacted with the same by means of the positioning unit, wherein an articulated arm device (12, 45) of the positioning unit is driven by a drive device of the positioning unit, wherein the charging contact is positioned between a contact position (37, 65) for power transmission and a retracted position (36, 56) for power interruption by means of the articulated arm device, wherein an adjustment force acting on the articulated arm device is formed by means of an adjustment drive (13, 49) of the drive device and wherein the drive device of the adjustment drive is actuated by a control device,
wherein a sensor device (62, 64) of the drive device detects the charging contact surface, wherein the sensor device is coupled with the control device, wherein a speed of the charging contact during movement of the charging contact from the retracted position into the contact position is controlled by the control device in accordance with a relative distance (A) between the charging contact and the charging contact surface,
**characterized in that**
another sensor device of the drive device detects the charging station or the vehicle, wherein the control device determines a relative distance of the charging contact in the retracted position and in the contact position, wherein the control device initiates the movement of the charging contact out of the retracted position before the vehicle stops at the charging station.

9. The method of claim 8,
**characterized in that**
during movement of the charging contact from the retracted position (36, 56) into the contact position, the charging contact (47, 48) is positively accelerated at first and negatively accelerated at a later point.

10. The method of claim 8 or 9,
**characterized in that**
during movement of the charging contact (47, 48) from the retracted position (36, 56) into the contact position (37, 65), the charging contact (47, 48) is moved at constant and/or maximum speed in a first movement section and is moved at a relatively reduced speed in a second movement section before reaching the contact position.

11. The method of claim 10,
**characterized in that**
the constant or maximum speed is ≥ 100 mm/s, preferably ≥ 360 mm/s, particularly preferably ≥ 500 mm/s.

12. The method of claim 10 or 11,
**characterized in that**
upon arrival in the contact position, the reduced speed is at least 70 %, preferably 50 %, particularly preferably 30 % of the constant and/or maximum speed or 0 mm/s.

13. The method of any one of claims 8 to 12,
**characterized in that**
the speed is reduced prior to arrival in the contact position (37, 65) at a relative distance (A) of ≤ 150 mm, preferably ≤ 100 mm, particularly preferably ≤ 50 mm.

14. The method of any one of claims 8 to 13,
**characterized in that**
the speed is reduced according to a linear function or an approximation function prior to arrival in the contact position (37, 65).

15. The method of any one of claims 8 to 14,
**characterized in that**
at least one sensor (61, 63) of the sensor device (62, 64) continuously transmits a distance value or a defined threshold of the relative distance (A) to the control device.

16. The method of any one of claims 8 to 15,
**characterized in that**
a contact force is exerted on the charging contact surface (11) by the adjustment drive (13, 49), wherein an electric motor (43, 58) of the adjustment drive is actuated by the control device.

17. The method according to claim 16,
**characterized in that**
a torque of the electric motor (43, 58) is detected by the control device, wherein the contact force is controlled by the control device in accordance with the torque of the electric motor.

18. The method according to any one of claims 8 to 17,
**characterized in that**
the control device determines a relative height of the charging contact (47, 48) and/or of the contact position (37, 65) above a road, wherein the control device determines a height of the vehicle above the road.

## Revendications

1. Unité de positionnement (10) pour former une connexion électriquement conductrice entre une station de charge fixe et un véhicule, en particulier un bus électrique ou similaire, dans lequel un contact de charge électrique de l'unité de positionnement peut être déplacé par rapport à une surface (11) de contact de charge et mis en contact avec celle-ci au moyen de l'unité de positionnement, dans lequel l'unité de positionnement a un dispositif à bras articulé (12) et un dispositif d'entraînement pour entraîner le dispositif à bras articulé, dans lequel le contact de charge peut être positionné entre une position de contact (37) pour la transmission de courant et une position rétractée (36) pour la coupure de courant au moyen du dispositif à bras articulé, dans lequel le dispositif d'entraînement a un entraînement d'ajustement (13) pour former une force d'ajustement agissant sur le dispositif de bras articulé, dans lequel le dispositif d'entraînement a un dispositif de contrôle au moyen duquel l'entraînement d'ajustement peut être actionné,
dans lequel le dispositif d'entraînement a un dispositif de capteur (62) au moyen duquel la surface de contact de charge peut être détectée, dans lequel le dispositif de capteur est couplé au dispositif de contrôle, dans lequel une vitesse du contact de charge pendant un mouvement du contact de charge à partir de la position rétractée à la position de contact peut être contrôlée par le dispositif de contrôle en fonction d'une distance relative (A) entre le contact de charge et la surface de contact de charge,
dans lequel le dispositif d'entraînement a un dispositif de ressort (29) coopérant mécaniquement avec l'entraînement d'ajustement, dans lequel l'unité de positionnement comprend un dispositif de retenue (26) pour fixer l'unité de positionnement au-dessus d'un véhicule sur un pylône ou un passage souterrain, dans lequel le dispositif de ressort a au moins un ressort de rappel pour former une force de rappel agissant sur le dispositif à bras articulé, dans lequel la force de rappel est supérieure à une force gravitationnelle du dispositif de bras articulé agissant sur le ressort de rappel dans la direction opposée.

2. Unité de positionnement selon la revendication 1,
**caractérisée en ce**
**qu'**une force de contact agissant sur la surface (11) de charge de contact peut être formée par l'entraînement d'ajustement (13), dans lequel l'entraînement d'ajustement a le dispositif de contrôle et un moteur électrique (43), qui peut être actionné par le dispositif de contrôle.

3. Unité de positionnement selon la revendication 1 ou la revendication 2,
**caractérisée en ce que**
l'entraînement d'ajustement (13) est un entraînement linéaire (28), de préférence un entraînement de tige filetée, de préférence encore un entraînement de tige filetée sans autoblocage.

4. Unité de positionnement selon l'une quelconque des revendications précédentes,
**caractérisée en ce que**
le dispositif de capteur a au moins un capteur (61), le capteur étant un commutateur mécanique, un capteur inductif, un capteur capacitif, un capteur magnétique, un capteur à ultrasons, un capteur radar et/ou un capteur optique.

5. Unité de positionnement selon la revendication 4,
**caractérisée en ce que**
le capteur (61) est disposé sur le dispositif de bras articulé (12), en particulier adjacent au contact de charge.

6. Unité de positionnement selon l'une quelconque des revendications précédentes,
**caractérisée en ce que**
l'entraînement d'ajustement (13) et/ou le dispositif de bras articulé (12) a un capteur de distance et/ou un capteur de position.

7. Unité de positionnement selon l'une quelconque des revendications précédentes,
**caractérisée en ce que**
le dispositif d'entraînement est configuré pour être couplé à un bus de données d'un véhicule.

8. Procédé pour former une connexion électriquement conductrice entre une station de charge fixe et un véhicule, en particulier un bus électrique ou similaire, dans lequel un contact de charge (47, 48) électrique d'une unité de positionnement (10, 44) est déplacé par rapport à une surface (11) de contact de charge et mis en contact avec celle-ci au moyen de l'unité de positionnement, dans lequel un dispositif à bras articulé (12, 45) de l'unité de positionnement est entraîné par un dispositif d'entraînement de l'unité de positionnement, dans lequel le contact de charge est positionné entre une position de contact (37, 65) pour la transmission de courant et une position rétractée (36, 56) pour la coupure de courant au moyen du dispositif de bras articulé, dans lequel une force d'ajustement agissant sur le dispositif de bras articulé est formée au moyen d'un entraînement d'ajustement (13, 49) du dispositif d'entraînement et dans lequel l'entraînement d'ajustement est actionné par un dispositif de contrôle du dispositif d'entraînement,
dans lequel un dispositif de capteur (62, 64) du dispositif d'entraînement détecte la surface de contact de charge, dans lequel le dispositif de capteur est couplé au dispositif de contrôle, dans lequel une vitesse du contact de charge pendant un mouvement du contact de charge à partir de la position rétractée à la position de contact est contrôlée par le dispositif de contrôle en fonction d'une distance relative (A) entre le contact de charge et la surface de contact de charge,
**caractérisé en ce**
**qu'**un autre dispositif de capteur du dispositif d'entraînement détecte la station de charge ou le véhicule, dans lequel le dispositif de contrôle détermine une distance relative du contact de charge dans la position rétractée et dans la position de contact, dans lequel le dispositif de contrôle initie le mouvement du contact de charge à partir de la position rétractée avant que le véhicule ne s'arrête à la station de charge.

9. Procédé selon la revendication 8,
**caractérisé en ce que**
lors du déplacement du contact de charge à partir de la position rétractée (36, 56) à la position de contact, le contact de charge (47, 48) est d'abord accéléré positivement, puis accéléré négativement à un moment ultérieur.

10. Procédé selon la revendication 8 ou la revendication 9,
**caractérisé en ce que**
lors du déplacement du contact de charge (47, 48) à partir de la position rétractée (36, 56) à la position de contact (37, 65), le contact de charge (47, 48) est déplacé à une vitesse constante et/ou maximale dans une première partie de déplacement et est déplacé à une vitesse relativement réduite dans une deuxième partie de déplacement avant d'atteindre la position de contact.

11. Procédé selon la revendication 10,
**caractérisé en ce que**
la vitesse constante ou maximale est ≥ 100 mm/s, de préférence ≥ 360 mm/s, de préférence encore ≥ 500 mm/s.

12. Procédé selon la revendication 10 ou la revendication 11,
**caractérisé en ce**
**qu'**à l'arrivée dans la position de contact, la vitesse réduite est d'au moins 70 %, de préférence 50 %, de préférence encore 30 % de la vitesse constante et/ou maximale ou 0 mm/s.

13. Procédé selon l'une quelconque des revendications 8 à 12,
**caractérisé en ce que**
la vitesse est réduite avant l'arrivée dans la position de contact (37, 65) à une distance relative (A) de ≤ 150 mm, de préférence ≤ 100 mm, de préférence encore ≤ 50 mm.

14. Procédé selon l'une quelconque des revendications 8 à 13,
**caractérisé en ce que**
la vitesse est réduite selon une fonction linéaire ou une fonction d'approximation avant l'arrivée dans la position de contact (37, 65).

15. Procédé selon l'une quelconque des revendications 8 à 14,
**caractérisé en ce**
**qu'**au moins un capteur (61, 63) du dispositif de capteur (62, 64) transmet en continu une valeur de distance ou une valeur de seuil définie de la distance relative (A) au dispositif de contrôle.

16. Procédé selon l'une quelconque des revendications 8 à 15,
**caractérisé en ce**
**qu'**une force de contact est exercée sur la surface (11) de charge de contact par l'entraînement d'ajustement (13, 49), dans lequel un moteur électrique (43, 58) de l'entraînement d'ajustement est actionné par le dispositif de contrôle.

17. Procédé selon la revendication 16,
**caractérisé en ce**
**qu'**un torque du moteur électrique (43, 58) est détecté par le dispositif de contrôle, dans lequel la force de contact est contrôlée par le dispositif de contrôle en fonction du torque du moteur électrique.

18. Procédé selon l'une quelconque des revendications 8 à 17,
**caractérisé en ce que**
le dispositif de contrôle détermine une hauteur relative du contact de charge (47, 48) et/ou de la position de contact (37, 65) au-dessus d'une voie, dans lequel le dispositif de contrôle détermine une hauteur du véhicule au-dessus de la voie.
